# EUROPÄISCHE PATENTSCHRIFT

(11) **EP 1 502 983 B1**
(45) Veröffentlichungstag und Bekanntmachung des Hinweises auf die Patenterteilung: **11.06.2008**
(21) Anmeldenummer: 04015951.9
(22) Anmeldetag: 07.07.2004
(51) Int. Cl.: D06F 37/22, D06F 39/00

(54) **Verfahren zur Bestimmung des Gewichts der Wäsche in einer Waschmaschinentrommel**
Method for determining the weight of laundry in the drum of a washing machine
Procédé pour determiner le poids du linge dans un tambour de machine à laver

(30) Priorität: 28.07.2003 DE 10334572
(43) Veröffentlichungstag der Anmeldung: 02.02.2005
(73) Patentinhaber: Miele & Cie. KG, 33332 Gütersloh (DE)
(72) Erfinder: Beier, Dominic, 33332 Gütersloh (DE); Koschnicke, Jürgen, 33334 Gütersloh (DE); Krause, Diethard, 33332 Gütersloh (DE)

(56) Entgegenhaltungen:
- DE-A- 4 018 599
- DE-A- 10 046 712
- DE-A- 10 122 749

## Beschreibung

Die Erfindung betrifft ein Verfahren zur Bestimmung des Gewichts der in der Trommel vorhandenen Wäsche in einer Waschmaschine mit einem Laugenbehälter, in dem die Trommel drehbar gelagert ist, mit einem Gehäuse, in dem der Laugenbehälter im oberen Bereich an Federn aufgehängt und im unteren Bereich über mindestens einen Stoßdämpfer abgestützt ist, wobei als Stoßdämpfer ein Reibungsdämpfer verwendet wird, der aus einem zylindrischen Gehäuse und einer koaxial zur Gehäuselängsachse angeordneten, in diesem bewegbaren Kolbenstange besteht, und bei dem ein Reibbelag auf der Kolbenstange zwischen zwei Anschlägen und diesen zugeordneten Federelementen beweglich angeordnet ist und mit einem System zur Bestimmung des Gewichts der in der Trommel vorhandenen Wäsche, welches eine Messschaltung zur Ermittlung der gewichtskraftbedingten Absenkung des Laugenbehälters beinhaltet.

Eine Waschmaschine mit einem System zur Bestimmung des Gewichts der in der Trommel vorhandenen Wäsche wird beispielsweise unter der Bezeichnung W 377 WPS von der Anmelderin hergestellt und vertrieben. Sie ist auch aus der DE 199 46 245 A1 bekannt. Bei diesen Waschmaschinen ist parallel zum Stoßdämpfer ein Wegsensor angeordnet. Der Laugenbehälter mit der darin drehbar gelagerten Trommel ist über Federn mit dem Gehäuse verbunden. Sobald das Waschgut in die Trommel gelegt wird, ändert sich die Gesamtmasse des Laugenbehälters. Durch die größer werdende Masse werden die Federn weiter gedehnt, so dass der Laugenbehälter um so tiefer hängt, je größer die Masse der eingefüllten Wäsche ist. Die neue Höhenlage des Laugenbehälters wird mit dem Wegsensor ermittelt. Damit liefert der Wegsensor ein Signal, dessen Differenz zur Nulllage (unbeladene Trommel) proportional zum Gewicht der eingefüllten Wäsche ist.

Für den Schleuderbetrieb der Waschmaschine muss sichergestellt werden, dass die Schwingamplitude beim Durchgang durch den kritischen Drehzahlbereich (Resonanz des Feder-Masse-Systems, bestehend aus den Federn und der Masse des gefüllten Laugenbehälters) begrenzt wird. Dafür sorgen Stoßdämpfer zwischen dem Laugenbehälter und dem Gehäuseboden. Das Wiegen der Wäsche erfolgt bei stillstehendem Laugenbehälter. Hier dürfen die Dämpfer keine Kräfte aufbringen, da sonst die Dämpferkraft während des Beladens mit Wäsche erst durch die Gewichtskraft der Wäsche überwunden werden muss, um überhaupt ein Absinken des Laugenbehälters und damit ein mit dem Wegsensor messbares Wegsignal zu ermöglichen. Es werden deshalb bei der W 377 WPS ÖI-Hydraulik-Dämpfer mit geschwindigkeitsproportionaler Dämpfkraft eingesetzt, die nur eine sehr geringe Dämpfkraft besitzen, wenn sie nicht bewegt werden (wünschenswert wäre gar keine Dämpfung). Erst wenn der Laugenbehälter auslenkt, treten Geschwindigkeiten auf, die dazu führen, dass Gegenkräfte entstehen und so die Schwingamplitude begrenzt wird. Nachteile der Öl-Hydraulik-Dämpfer sind ihr hoher Preis, eine geringe Dämpfung, akustische Probleme und geringe Umweltverträglichkeit (das Öl muss entsorgt werden).

Aus der DE 40 18 599 A1 ist ein sogenannter Federkolbendämpfer bekannt. Hierbei handelt es sich um einen Reibungsdämpfer, bei dem der Reibbelag auf der Kolbenstange zwischen zwei Federelementen beweglich angeordnet ist, wobei sich die Federelemente jeweils an einem mit der Kolbenstange verbundenen Anschlag abstützen. Hierdurch entsteht ein amplitudenabhängiges Dämpfungsverhalten.

Aus der DE 100 46 712 A1 ist der Einsatz eines Federkolbendämpfers in Verbindung mit einem Wegsensor bekannt. Der Federkolbendämpfer besitzt in diesem Messsystem mit nur einem Wegsensor den Nachteil, dass der Anfangszustand nicht definiert ist. Ist die Trommel leer, so besteht die Möglichkeit, dass die Reibbeläge sich in einer Position befinden, die nicht der Nulllage des Laugenbehälters entspricht. Die Federn üben dann eine Kraft auf den Laugenbehälter aus, die unterhalb der Reibkraft des Reibbelags liegt. Damit gibt es eine undefinierte Kraft, die als Offset auf das System wirkt und eine zusätzliche Ausdehnung der Federn, in die das Aggregat eingehängt ist, verursacht. Der Weg der Federn geht wiederum in den mit dem Wegsensor gemessenen Weg ein. Eine absolute Bestimmung der Masse des eingefüllten Waschguts wie bei Einsatz der Geschwindigkeitsproportionalen Dämpfer (z.B. ÖI-Hydraulik-Dämpfer) ist daher nicht mehr möglich. Das bedeutet, dass das Wäschegewicht nur bestimmt werden kann, wenn die Waschtrommel zunächst leer ist und dann gefüllt wird. Wird aber der Waschautomat in ausgeschaltetem Zustand als Wäschesammler benutzt, so ist es nicht möglich, den Waschautomaten anschließend einzuschalten und das Wäschegewicht korrekt abzulesen. Der Gebrauchsnutzen wird damit eingeschränkt.

Aus der DE 101 22 749 A1 ist eine Waschmaschine mit einer Einrichtung und ein Verfahren zur Bestimmung des Wäschegewichts bekannt, bei dem ein Federkolbendämpfer mit zwei Wegsensoren eingesetzt wird. Wegsensoren sind relativ teure Bauteile, so dass hierdurch der Preisvorteil des günstigeren Stoßdämpfers durch die zusätzlichen Sensorkosten verschlungen wird.

Der Erfindung stellt sich somit das Problem, ein Verfahren der eingangs genannten Art zu offenbaren, welches trotz Einsatz eines Federkolbendämpfers mit nur einem Wegsensor eine genaue Ermittlung des Wäschegewichts ermöglicht.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen (Ansprüche 2 und 3).

Die mit der Erfindung erreichbaren Vorteile bestehen in der mit einfachen Mitteln erreichten Messgenauigkeit bei einem Einsatz von nur einem Wegsensor.

In einer zweckmäßigen Ausführungsform des erfindungsgemäßen Verfahrens ermitteln die Vergleichsmittel den der höchsten Position des Laugenbehälters entsprechenden Positionswert am Ende des Waschprogramms.

In einer weiteren vorteilhaften Ausführungsform des erfindungsgemäßen Verfahrens erkennen die Vergleichsmittel ein Ansteigen der Laugenbehälterposition nach dem Einschalten der Netzspannungsversorgung der Waschmaschine zu Beginn des folgenden Programms und geben den dabei ermittelten, der höchsten Position des Laugenbehälters entsprechenden Positionswert an eine Auswerteschaltung weiter, welche den im vorhergehenden Waschprogramm abgespeicherten Nulllage-Wert durch den neu ermittelten Wert überschreibt. Hierdurch ist eine Sensierung der tatsächlichen Nulllage des Laugenbehälters auch dann möglich, wenn der Benutzer vor der Durchführung eines Waschprogramms Wäsche aus der Trommel entnimmt, nachdem die Netzspannungszufuhr zur Waschmaschine bereits eingeschaltet war. Dies kann beispielsweise dann der Fall sein, wenn nach dem Ende des vorhergehenden Waschprogramms Wäsche in der Trommel verblieben ist oder wenn die Trommel als Wäschesammler benutzt wurde.

Ein Ausführungsbeispiel der Erfindung ist in den Zeichnungen rein schematisch dargestellt und wird nachfolgend näher beschrieben. Es zeigen
- Figur 1: die Schemaskizze einer Waschmaschine zur Durchführung des erfindungsgemäßen Verfahrens;
- Figur 2: die Schemaskizze eines Schnitts durch einen Federkolbendämpfer;
- Figur 3: das Kraft-Weg-Diagramm eines Federkolbendämpfers;
- Figur 4: ein Blockschaltbild der Waschmaschinensteuerung.

Der Laugenbehälter (4) einer Waschmaschine mit der darin drehbar gelagerten Trommel (5) ist an Federn (2, 3) im oberen Bereich (1a) des Gehäuses (1) aufgehängt. Sobald Waschgut (6) in die Trommel (5) gelegt wird, ändert sich die Gesamtmasse des Laugenbehälters (4), die aus der Masse m_{Lb} des leeren Laugenbehälters (4) und der Masse m_{w} des Waschguts (6) zusammengesetzt ist. Durch Massezunahme werden die Federn (2, 3) weiter gedehnt, so dass der Laugenbehälter (4) um so tiefer hängt, je größer die Masse der eingefüllten Wäsche ist. Die gewichtskraftbedingte Absenkung (Δs) des Laugenbehälters (4) wird mit einem Wegsensor (9) ermittelt. Damit liefert der Wegsensor (9) ein Signal an eine Messschaltung M, das proportional zum Gewicht m_{w} der eingefüllten Wäsche ist. Die Messschaltung (M) ist in der MikroprozessorSteuerung (MC) der Waschmaschine integriert und ermittelt aus der Absenkung (Δs) und der/den Federkonstanten einen Gewichtswert. Der Gewichtswert wird entweder in einer Anzeigeeinrichtung (nicht dargestellt) zur Benutzerinformation oder von der MikroprozessorSteuerung (MC) direkt zur weiteren Steuerung des Waschprogramms verwendet.

Für den Schleuderbetrieb des Waschautomaten muss sichergestellt werden, dass die Schwingamplitude beim Durchgang durch den kritischen Drehzahlbereich (Resonanz des Feder-Masse-Systems bestehend aus den Federn (2, 3) und der Masse des gefüllten Laugenbehälters (4)) begrenzt wird. Dafür sorgen zwei Dämpfer (7, 8), die als Federkolbendämpfer ausgebildet und zwischen dem Laugenbehälter (4) und Gehäuseboden (1 b) angeordnet sind.

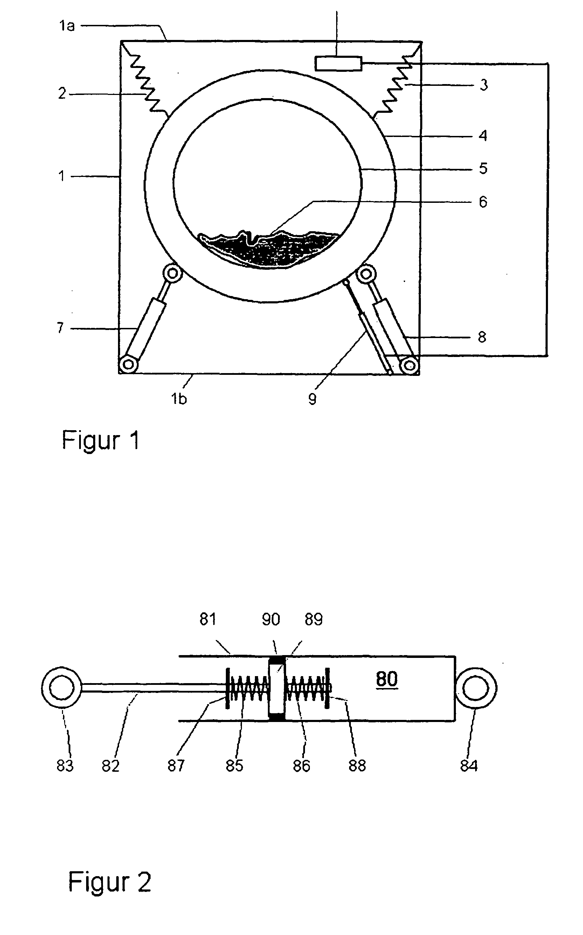

Figur 2 zeigt einen Federkolbendämpfer (80), wie er grundsätzlich aus der DE 40 18 599 A1 bekannt ist, jedoch in weiter ausgestalteter Weise zum Erfindungsbesitz der Patentinhaberin gehört (vgl. die ältere, nachveröffentlichte Anmeldung laut DE 102 25 335 A1). Er besteht aus einem zylindrischen Dämpfergehäuse (81) und einer darin angeordneten, in Axialrichtung des Dämpfergehäuses (81) verschiebbaren Kolbenstange (82). Mit dem Befestigungspunkt (83) wird die Kolbenstange (82) am Laugenbehälter (4) befestigt, mit dem Befestigungspunkt (84) das Dämpfergehäuse (81) am Gehäuseboden (1b). Die Kolbenstange (82) besitzt zwei angeformte Federteller (87, 88). Zwischen diesen sind zwei Federelemente (85, 86) über die Kolbenstange (82) geschoben, die zwischen sich einen Belagblock (89) einklemmen. Auf dem Belagblock (89) sind Reibbeläge (90) angebracht, die sich an der Innenwand des Dämpfergehäuses (81) abstützen. Eine Bewegung des Laugenbehälters (4) wird von der Kolbenstange (82) auf die beiden Federteller (87, 88) übertragen. Diese übertragen die Bewegung weiter auf die Federelemente (85, 86), welche wiederum die Kräfte auf den beweglich gelagerten Belagblock (89) übertragen. Bei einer Bewegung der Kolbenstange (82) werden zunächst die Federelemente (85, 86) in der entsprechenden Richtung entlastet bzw. zusammengedrückt. Sobald die aufgebaute Kraft so groß ist, dass die Reibkraft überwunden werden kann, bewegt sich der Belagblock (89) mit den Reibbelägen (90) mit.

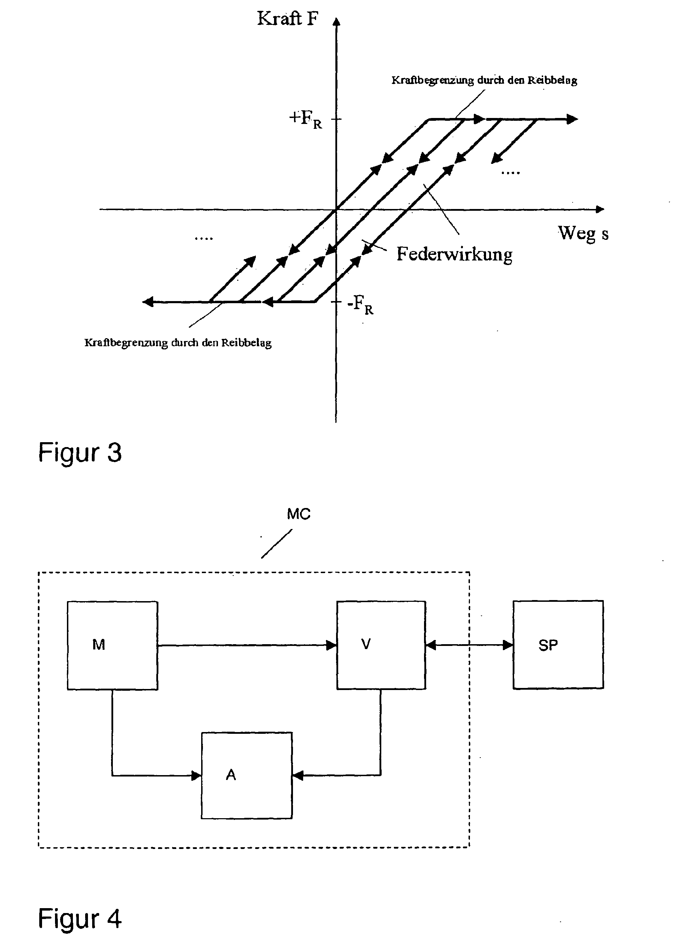

Figur 3 zeigt das idealisierte Kraft-Weg-Diagramm des Federkolbendämpfers (80). Der Unterschied zu einem einfachen Reibungsdämpfer besteht darin, dass schon bei Einleitung kleinerer Kräfte F, die zwischen F_{R} und -F_{R} liegen, Wege s zurückgelegt werden. Durch die Federelemente (85, 86) entsteht ein Übergangsbereich, in dem der Dämpfer (80) linear arbeitet. Werden also in der Waschmaschine nach Figur 1 Federkolbendämpfer (80) eingesetzt, so sinkt der Laugenbehälter (4) während der Beladung der Trommel (5) mit Waschgut (6) ab, was als Wegänderung messbar ist, so dass unter Berücksichtigung der Federkonstanten das Gewicht der Trommelbeladung berechnet werden kann. Der Wegsensor (9) kann, wie in Figur 1 dargestellt, parallel zu einem Dämpfer angeordnet sein, oder auf zwei mögliche Arten (nicht dargestellt) im Dämpfer integriert werden: Die erste Möglichkeit besteht in der Anordnung zwischen Kolbenstange (82) und Dämpfergehäuse (81), die zweite in einer Anordnung zwischen der Kolbenstange (82) und einem der Reibbeläge (90). Unabhängig davon, wo der Sensor angebracht ist, ergeben sich folgende Nachteile:
- Liegt die Kraft des Federkolbendämpfers (80) zu Beginn des Beladens nahe der Reibkraft, so reicht eine geringe zusätzliche Gewichtskraft durch das eingefüllte Waschgut (6), damit der Reibbelag (90) verrutscht und damit der lineare Bereich verlassen wird.
- Der Anfangszustand ist nicht definiert. Ist die Trommel (5) leer, so stellt sich beim Federkolbendämpfer (80) eine Kraft ein, die zwischen -F_{R} und +F_{R} liegt. Damit gibt es eine undefinierte Kraft im Bereich -F_{R} bis +F_{R}, die als Offset auf das System wirkt und damit in den Weg der Federn (2, 3), in die der Laugenbehälter (4) eingehängt ist, eingeht. Um das Wäschegewicht zu bestimmen, muss die Auslenkung der Zugfedern (2, 3) bei leerer Trommel oder alternativ die Gewichtskraft, die vom Laugenbehälter auf das Gehäuse übertragen wird (beides im folgenden als Nulllage bezeichnet) bekannt sein, um beim anschließenden Beladen aus der dann gemessenen Absenkung (Δs) (alternativ: der Gewichtskraft) und der vorher ermittelten Nulllage die Wäschemasse zu bestimmen.
- Der Weg der Federn geht wiederum in den mit dem Wegsensor gemessenen Weg ein. Eine absolute Bestimmung der Masse des eingefüllten Waschguts wie beim Einsatz der geschwindigkeits-proportionalen Dämpfer (z.B. Öl-Hydraulik-Dämpfer) ist daher nicht mehr möglich. Das bedeutet, dass es wohl möglich ist, das Wäschegewicht zu bestimmen, wenn die Trommel zunächst leer ist und dann gefüllt wird. Wird aber die Trommel in ausgeschaltetem Zustand als Wäschesammler benutzt, so ist es nicht möglich, die Waschmaschine anschließend einzuschalten und das Wäschegewicht korrekt abzulesen. Der Gebrauchsnutzen wird damit eingeschränkt.

Hier setzt das erfindungsgemäße Verfahren an, welches diese Nachteile beseitigt. Zur Durchführung dieses Verfahrens ist in der Waschmaschinensteuerung (MC, s. Figur 4) neben der Messschaltung (M) zur Ermittlung des Wäschegewichts eine Vergleichsschaltung (V) integriert, welche wiederum mit einem nichtflüchtigen Speicher (SP) in Verbindung steht. Darüber hinaus stehen die Messschaltung (M) und die Vergleichsschaltung (V) mit einer Auswerteschaltung (A) in Verbindung.

Beim Entladevorgang, d. h. zu einem festgelegten Zeitpunkt vor Beendigung des Waschprogramms, beispielsweise nach dem Endschleudern, wird zunächst der Inhalt des nichtflüchtigen Speichers (Sp) gelöscht. Anschließend misst der Wegsensor (9) etwa im 1-Sekunden-Takt die Laugenbehälter-Absenkung (Δs) und gibt seine Messwerte an die Messschaltung (M) weiter, die daraus den Gewichtswert ermittelt. Die Vergleichsschaltung (V) vergleicht nun entweder den Gewichtswert oder direkt die Absenkung (Δs) als Positionswert mit dem Inhalt des nichtflüchtigen Speichers (Sp). Immer dann, wenn der aktuelle Positionswert einer höheren Laugenbehälter-Position und damit einem geringeren Wäschegewicht entspricht als der im Speicher (SP) vorhandene Wert, überschreibt die Vergleichsschaltung den Wert im Speicher (SP) mit dem aktuellen Wert. Hierdurch ist nach Beendigung des laufenden Programms im Speicher ein Positionswert abgelegt, welcher der höchsten Laugenbehälter-Position im letzten Abschnitt des Waschprogramms entspricht, wobei dieser im Idealfall, d. h. bei vollständig entladener Trommel, dem Wäschegewicht Null entspricht. Dieser Wert wird beim Start des nächsten Programms von der Messschaltung als der der Nulllage entsprechende Wert verwendet.

Zur Sicherheit wird die Vergleichsschaltung (V) auch zu Beginn eines Programms, d. h. nach der Einschaltung der Netzspannungsversorgung der Waschmaschine aktiviert. Dabei wird der Inhalt des nichtflüchtigen Speichers (Sp) zunächst nicht gelöscht, so dass der im vorhergehenden Waschprogramm ermittelte Positionswert zunächst erhalten bleibt. Die Vergleichsschaltung (V) ist so ausgelegt, dass sie ein Ansteigen der Laugenbehälterposition erkennt. In diesem Fall wird der dabei ermittelte, der höchsten Position des Laugenbehälters entsprechenden Positionswert an die Auswerteschaltung (A) weitergeben, welche den im vorhergehenden Waschprogramm abgespeicherten Nulllage-Wert durch den neu ermittelten Wert überschreibt.

## Patentansprüche

1. Verfahren zur Bestimmung des Gewichts des in der Trommel (5) vorhandenen Waschguts (6) in einer Waschmaschine mit einem Laugenbehälter (4), in dem die Trommel (5) drehbar gelagert ist, mit einem Gehäuse (1), in dem der Laugenbehälter (4) im oberen Bereich (1a) an Federn (2, 3) aufgehängt und im unteren Bereich über mindestens einen Stoßdämpfer abgestützt ist, wobei als Stoßdämpfer ein Reibungsdämpfer (7, 8) verwendet wird, der aus einem zylindrischen Gehäuse (81) und einer koaxial zur Gehäuselängsachse angeordneten, in diesem bewegbaren Kolbenstange (82) besteht, und bei dem ein Reibbelag (90) auf der Kolbenstange (82) zwischen zwei Anschlägen (87, 88) und diesen zugeordneten Federelementen (85, 86) beweglich angeordnet ist und mit einem System zur Bestimmung des Gewichts der in der Trommel vorhandenen Wäsche, welches eine Messschaltung (M) zur Ermittlung der gewichtskraftbedingten Absenkung (Δs) des Laugenbehälters (4) beinhaltet,
**dadurch gekennzeichnet,**
**dass** das System weiterhin Vergleichsmittel (V) beinhaltet, welche einen der höchsten Position des Laugenbehälters (4) während eines bestimmten Programmabschnitts in einem Waschprogramm entsprechenden Positionswert ermitteln und diesen Wert an im System enthaltene nichtflüchtige Speichermittel (SP) weitergeben, und dass dieser Positionswert zu Beginn eines folgenden Waschprogramms als der Nulllage entsprechender Wert verwendet wird.

2. Verfahren zur Bestimmung des Wäschegewichts nach Anspruch 1,
**dadurch gekennzeichnet,**
**das**s die Vergleichsmittel (V) den der höchsten Position des Laugenbehälters (4) entsprechenden Positionswert am Ende des Waschprogramms ermitteln.

3. Verfahren zur Bestimmung des Wäschegewichts nach Anspruch 2,
**dadurch gekennzeichnet,**
**dass** die Vergleichsmittel (V) ein Ansteigen der Laugenbehälterposition nach der Einschaltung der Netzspannungsversorgung der Waschmaschine zu Beginn des folgenden Programms erkennen und den dabei ermittelten, der höchsten Position des Laugenbehälters (4) entsprechenden Positionswert an eine Auswerteschaltung (A) weitergeben, welche den im vorhergehenden Waschprogramm abgespeicherten Nulllage-Wert durch den neu ermittelten Wert überschreibt.

## Claims

1. Method for determining the weight of the laundry in the drum (5) of a washing machine, the said washing machine including a washing liquid tub (4), in which the drum (5) is rotatably mounted, a housing (1), in which the washing liquid tub (4) is suspended on springs (2, 3) in the upper region (1a) and in the lower region is supported by means of at least one shock absorber, wherein a friction damper (7, 8) is used as a shock absorber, the said friction damper comprising a cylindrical housing (81) and a piston rod (82) that is disposed coaxially relative to the longitudinal axis of the housing and is displaceable in the said housing, and where a friction lining (90) is disposed on the piston rod (82) so as to be displaceable between two stop members (87, 88) and spring members (85, 86) that are associated therewith, also including a system for determining the weight of the laundry in the drum, the said system including a measuring circuit (M) for determining the lowering (Δs) of the washing liquid tub conditional on the weight force, **characterised in that** the system also includes comparative means (V), which determine a positional value that corresponds to the highest position of the washing liquid tub (4) during a specific program portion in a wash program and forwards this value to non-volatile storage means (SP) contained in the system, and **in that** this positional value is used at the start of a following wash program as the value that corresponds to the zero position.

2. Method for determining the weight of the laundry according to claim 1, **characterised in that** at the end of the wash program the comparative means (V) determine the positional value that corresponds to the highest position of the washing liquid tub (4).

3. Method for determining the weight of the laundry according to claim 2, **characterised in that** the comparative means (V) recognise a rise in the position of the washing liquid tub once the voltage supply has been switched on at the start of the following program and forward the positional value determined thereby corresponding to the highest position of the washing liquid tub (4) to an evaluation circuit (A), which overwrites the zero position value stored in the preceding wash program with the newly determined value.

## Revendications

1. Procédé pour déterminer le poids du linge (6) contenu dans le tambour (5) d'un lave-linge doté d'une cuve de lessive (4) dans laquelle le tambour (5) est monté de manière rotative, d'une carrosserie (1) dans laquelle la cuve de lessive (4) est suspendue à des ressorts (2, 3) dans la partie supérieure (1a) et prend appui sur au moins un amortisseur dans la partie inférieure, l'amortisseur employé étant un amortisseur à friction (7, 8) composé d'un boîtier cylindrique (81) et d'une tige de piston (82) mobile dans ce dernier et disposée coaxialement à l'axe longitudinal du boîtier, et dans le cas duquel une garniture de friction (90) est placée de façon mobile sur la tige de piston (82), entre deux butées (87, 88) et des éléments à ressort (85, 86) correspondants, et d'un système pour déterminer le poids du linge contenu dans le tambour, qui comporte un montage de mesure (M) pour établir l'abaissement (Δs) de la cuve de lessive (4) dû au poids, **caractérisé en ce que** le système comporte en outre des moyens de comparaison (V) qui déterminent une valeur de position correspondant à la position la plus haute de la cuve de lessive (4) durant une phase déterminée d'un programme de lavage et transmettent ladite valeur à des moyens de mémorisation (SP) non volatiles contenus dans le système, et **en ce qu'**au début d'un programme de lavage suivant, cette valeur de position est utilisée en tant que valeur correspondant à la position zéro.

2. Procédé pour déterminer le poids du linge selon la revendication 1, **caractérisé en ce que** les moyens de comparaison (V) établissent la valeur de position correspondant à la position la plus haute de la cuve de lessive (4) à la fin du programme de lavage.

3. Procédé pour déterminer le poids du linge selon la revendication 2, **caractérisé en ce que** les moyens de comparaison (V) détectent une élévation de la position de la cuve de lessive après la mise sous tension du lave-linge au début du programme suivant et transmettent la valeur de position ainsi établie, qui correspond à la position la plus haute de la cuve de lessive (4), à un circuit d'interprétation (A) qui remplace la valeur de position zéro mémorisée lors du programme de lavage précédent par la valeur nouvellement établie.
